# EUROPÄISCHE PATENTANMELDUNG

(11) **EP 1 426 255 A1**
(43) Veröffentlichungstag der Anmeldung: **09.06.2004**
(21) Anmeldenummer: 03104519.8
(22) Anmeldetag: 03.12.2003
(51) Int. Cl.: B60R 25/02, B62D 1/18

(54) **Vorrichtung zur Verriegelung einer höhenverstellbaren Lenkspindel eines Kraftfahrzeuges**

(30) Priorität: 05.12.2002 DE 10256784
(71) Anmelder: Valeo Sicherheitssysteme GmbH, 85253 Erdweg (DE)
(72) Erfinder: Starken, Harald, 85253 Walkertshofen (DE)
(74) Vertreter: Hervouet, Sylvie

(57) **Zusammenfassung**

Die Erfindung betrifft eine Vorrichtung zur Verriegelung einer höhenverstellbaren Lenkspindel (1) eines Kraftfahrzeuges, die um eine senkrecht zur Lenkspindelachse (5) angeordnete Schwenkachse (6) verschwenkbar ist, wobei die Vorrichtung (7) einen an der Lenkspindel (1) befestigbaren, umfangseitig mit nutenförmigen Ausnehmungen (9) versehenen Sperrkranz (8) und einen von einer entriegelten Stellung in eine verriegelte Stellung betätigbaren Sperrbolzen (11) umfaßt und wobei der Sperrbolzen (11) in der verriegelten Stellung in eine nutenförmige Ausnehmung (9) des Sperrkranzes (8) eingreift.

Um zu erreichen, daß die Vorrichtung (7) bei unterschiedlichen Stellungen der Lenkspindel (1) eine sichere Verriegelung bewirkt, ohne daß bei der Höhenverstellung der Lenkspindel (1) der Sperrbolzen mitbewegt werden muß, schlägt die Erfindung vor, die nutenförmigen Ausnehmungen (9) des Sperrkranzes (8), in die der Sperrbolzen (11) eingreift, auf einer Kugeloberfläche anzuordnen, deren Mittelpunkt (13) auf dem Schnittpunkt der Lenkspindelachse (5) und Schwenkachse (6) der Lenkspindel (1) liegt.

## Beschreibung

Die Erfindung betrifft eine Vorrichtung zur Verriegelung einer höhenverstellbaren Lenkspindel eines Kraftfahrzeuges, die um eine senkrecht zur Lenkspindelachse angeordnete Schwenkachse verschwenkbar ist.

Bei bekannten höhenverstellbaren Lenkspindeln sind die zum Schutz gegen Diebstahl vorgesehenen Verriegelungsvorrichtungen üblicherweise fest mit der Lenkanlage verbunden und werden bei einer Verstellung der Lenkspindel mit dieser mitbewegt. Dieses gilt insbesondere auch für Verriegelungsvorrichtungen, die aus einem an der Lenkspindel befestigbaren, umfangseitig mit nutenförmigen Ausnehmungen versehenen Sperrkranz und einem von einer entriegelten Stellung in eine verriegelte Stellung betätigbaren Sperrbolzen bestehen, wobei der Sperrbolzen in der verriegelten Stellung in eine nutenförmige Ausnehmung des Sperrkranzes eingreift und die Lenkspindel dadurch blockiert.

Nachteilig ist bei diesen bekannten Verriegelungsvorrichtungen unter anderem, daß für das Schwenken bzw. auch für ein Verschieben der Lenkspindel ein relativ großer Raumbedarf benötigt wird, weil die gesamte Verriegelungsvorrichtung mitverschwenkt bzw. mitverschoben werden muß. Außerdem müssen die erforderlichen elektrischen Kabel zwischen den an der Lenksäule angeordneten elektrischen Bauteilen und der Batterie bzw. sonstigen Steuereinheiten relativ lang ausgebildet sein, was zu aufwendigen und kostenintensiven Lösungen führt, um die Kabel beim Verschieben bzw. Verschwenken der Lenkspindel vor Beschädigungen zu schützen.

Aus der DE 198 09 294 C2 ist bereits eine Vorrichtung zur Verriegelung einer höhenverstellbaren Lenkspindel bekannt, bei welcher der zahnförmig ausgebildete Sperrbolzen nicht an der verstellbaren Lenkspindel, sondern an der Fahrzeugkarosserie angeordnet ist, so daß sich der Sperrbolzen bei einer Verstellbewegung der Lenkspindel nicht mitbewegt. Um dabei sicherzustellen, daß beim Verstellen der Lenkspindel zwischen dem Sperrbolzen und dem als Zahnkranz ausgebildeten Sperrkranz stets optimale Eingriffsverhältnisse herrschen, ist der Sperrbolzen auf seiner dem Zahnkranz zugewandten Seite in Richtung seiner Längsachse gewölbt ausgebildet und weist somit eine ballige Form auf. Der Sperrkranz selbst besitzt eine kreiszylinderförmige Außenkontur.

Es hat sich gezeigt, daß eine derartige Ausgestaltung der Verriegelungsvorrichtung nicht bei allen Fahrzeugtypen vorteilhaft einsetzbar ist.

Der Erfindung liegt daher die Aufgabe zugrunde, eine möglichst universell einsetzbare Vorrichtung zur Verriegelung einer höhenverstellbaren Lenkspindel anzugeben, die eine Befestigung des Verriegelungsmechanismus am nicht höhenverstellbaren Teil der Lenkung oder am Fahrzeugrahmen erlaubt und bei der durch die Höhenverstellung des Lenkrades der Sperrbolzen nicht mitbewegt wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, die nutenförmigen Ausnehmungen des Sperrkranzes, in die der Sperrbolzen eingreift, auf einer Kugeloberfläche anzuordnen, deren Mittelpunkt auf dem Schnittpunkt der Lenkspindelachse und Schwenkachse der Lenkspindel liegt.

Als vorteilhaft hat es sich erwiesen, wenn die dem Nutengrund zugewandte Oberfläche des Sperrbolzens derart ausgebildet ist, daß sie in der verriegelten Stellung des Sperrbolzens eine zur Wölbung des Nutengrundes parallele Oberfläche aufweist.

Eine besonders sichere Verriegelung der Lenkspindel ergibt sich, wenn die dem Nutengrund zugewandte Oberfläche des Sperrbolzens in der verriegelten Stellung des Sperrbolzens formschlüssig an dem Nutengrund der nutenförmigen Ausnehmungen des Sperrkranzes anliegt, sofern sichergestellt wird, daß die beim Verschwenken der Lenkspindel auftretende Reibung zwischen Sperrbolzen und Nutengrund gering ist.

Der Sperrbolzen kann zur Verriegelung sowohl schwenkbar als auch axial verschiebbar an der Fahrzeugkarosserie anordbar sein.

Weitere Einzelheiten und Vorteile der Erfindung ergeben sich aus den folgenden anhand von Figuren erläuterten Ausführungsbeispielen. Es zeigen:
Fig.1 die Seitenansicht einer schematisch dargestellten höhenverstellbaren Lenkspindel mit einer erfindungsgemäßen Vorrichtung mit Sperrkranz und Sperrbolzen, wobei sich der Sperrbolzen in der verriegelten Stellung befindet, und
Fig.2 eine perspektivische Darstellung des Sperrkranzes einer erfindungsgemäßen Vorrichtung.

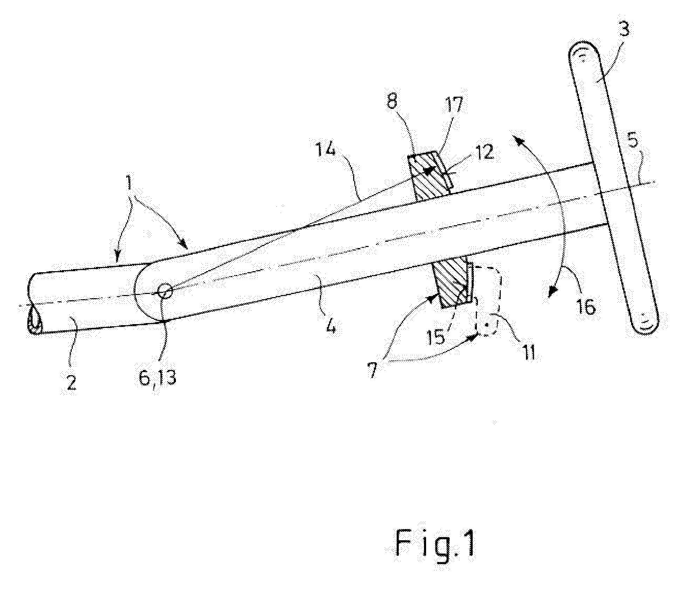

In Fig.1 ist mit 1 eine Lenkspindel bezeichnet, die aus einem unteren Lenkrohr 2 und einem dem Lenkrad 3 zugewandten oberen Lenkrohr 4 besteht. Das obere Lenkrohr 4 ist zur Höhenverstellung der Lenkspindel 1 um eine senkrecht zur Lenkspindelachse 5 angeordnete Schwenkachse 6 verschwenkbar und in der jeweiligen verschwenkten Stellung fixierbar.

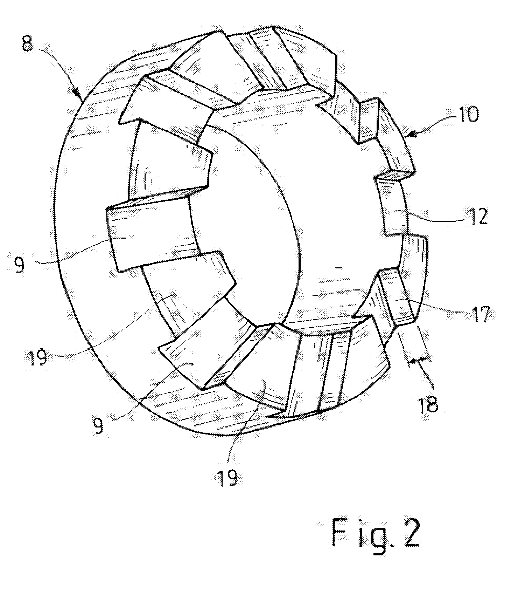

An dem oberen Lenkrohr 4 ist eine erfindungsgemäße Vorrichtung 7 zur Verriegelung der Lenkspindel 1 angeordnet. Die Vorrichtung 7 umfaßt einen an dem oberen Lenkrohr 4 befestigten Sperrkranz 8, der umfangseitig nutenförmige Ausnehmungen 9 aufweist (Fig.2), welche durch Stege 10 getrennt sind. Die Vorrichtung 7 weist ferner einen gestrichelt dargestellten Sperrbolzen 11 auf, welcher von einer entriegelten Stellung in die in Fig.1 dargestellte verriegelte Stellung verschwenkbar ist. In der verriegelten Stellung greift der Sperrbolzen 11 in eine der nutenförmigen Ausnehmungen 9 des Sperrkranzes 8 ein. Der Sperrbolzen 11 ist an der Fahrzeugkarosserie befestigt, so daß bei einer Schwenkbewegung des oberen Lenkrohres 4 keine entsprechende Schwenkbewegung des Sperrbolzens 11 erfolgt.

Der jeweilige Nutengrund 12 der nutenförmigen Ausnehmung 9 des Sperrkranzes 8 ist auf einer Kugeloberfläche angeordnet, deren Mittelpunkt 13 mit dem Schnittpunkt der Lenkspindelachse 5 und der Schwenkachse 6 des oberen Lenkrohres 4 zusammenfällt. Der entsprechende Radius der Kugel ist in Fig.1 mit 14 bezeichnet.

Außerdem ist die dem Nutengrund 12 zugewandte Oberfläche 15 des Sperrbolzens 11 derart ausgebildet, daß sie in der verriegelten Stellung des Sperrbolzens 11 eine zur Wölbung des Nutengrundes 12 parallele Oberfläche aufweist.

Wird daher das obere Lenkrohr 4 in Richtung des mit 16 bezeichneten Pfeiles verschwenkt, so weist die der Wölbung des Nutengrundes 12 parallele Oberfläche 15 des Sperrbolzens 11 im wesentlichen stets den gleichen Abstand von der gewölbten Fläche des Nutengrundes 12 auf bzw. die gewölbte Fläche des Nutengrundes 12 stützt sich gleitend an der Oberfläche 15 des Sperrbolzens 11 ab. Obwohl der Sperrbolzen 11 bei den Schwenkbewegungen des oberen Lenkrohres 4 nicht mitbewegt wird, besteht daher nicht die Gefahr, daß der Sperrbolzen 11 bei dieser Schwenkbewegung des Lenkrohres 4 aus der nutenförmigen Ausnehmung 9 herausgleitet.

Um sicherzustellen, daß die Seitenwände 17 der nutenförmigen Ausnehmungen 9 eine im wesentlichen konstante Breite 18 aufweisen, sollte auch die Oberfläche 19 der zwischen den nutenförmigen Ausnehmungen 9 befindlichen Stege 10 auf einer gemeinsamen Kugeloberfläche liegen, die parallel zu der Kugelfläche angeordnet ist, auf welcher die den nutenförmigen Ausnehmungen 9 zugeordneten Nutengründe 12 liegen.

Selbstverständlich ist die Erfindung nicht auf das vorstehend beschriebene Ausführungsbeispiel beschränkt. So muß beispielsweise der Sperrbolzen nicht verschwenkbar angeordnet sein, um von der entriegelten in die verriegelte Stellung bewegt zu werden, sondern kann auch über eine geradlinige Schiebebewegung in diese Stellung gelangen. Dabei sollte die Richtung der Sperrbolzenbewegung senkrecht zur (Kugel-) Oberfläche der Nutengründe des Sperrkranzes liegen.

### Bezugszeichenliste

- 1: Lenkspindel
- 2: untere Lenkrohr
- 3: Lenkrad
- 4: obere Lenkrohr
- 5: Lenkspindelachse
- 6: Schwenkachse
- 7: Vorrichtung
- 8: Sperrkranz
- 9: nutenförmige Ausnehmung
- 10: Steg
- 11: Sperrbolzen
- 12: Nutengrund
- 13: Mittelpunkt
- 14: Radius
- 15: Oberfläche (Sperrbolzen)
- 16: Pfeil
- 17: Seitenwand
- 18: Breite
- 19: Oberfläche (Steg)

## Patentansprüche

1. Vorrichtung zur Verriegelung einer höhenverstellbaren Lenkspindel (1) eines Kraftfahrzeuges, die um eine senkrecht zur Lenkspindelachse (5) angeordnete Schwenkachse (6) verschwenkbar ist, mit den Merkmalen:
a) die Vorrichtung (7) umfaßt einen an der Lenkspindel (1) befestigbaren, umfangseitig mit nutenförmigen Ausnehmungen (9) versehenen Sperrkranz (8) und einen von einer entriegelten Stellung in eine verriegelte Stellung betätigbaren Sperrbolzen (11), wobei der Sperrbolzen (11) in der verriegelten Stellung in eine nutenförmige Ausnehmung (9) des Sperrkranzes (8) eingreift, und
b) der jeweilige Nutengrund (12) der nutenförmigen Ausnehmungen (9) des Sperrkranzes (8) ist auf einer Kugeloberfläche angeordnet, deren Mittelpunkt (13) auf dem Schnittpunkt der Lenkspindelachse (5) und Schwenkachse (6) der Lenkspindel (1) liegt.

2. Vorrichtung nach Anspruch 1, **dadurch gekennzeichnet, daß** die dem Nutengrund (12) zugewandte Oberfläche (15) des Sperrbolzens (11) derart ausgebildet ist, daß sie in der verriegelten Stellung des Sperrbolzens (11) eine zur Wölbung des Nutengrundes (12) parallele Oberfläche aufweist.

3. Vorrichtung nach Anspruch 1 oder 2, **dadurch gekennzeichnet, daß** die dem Nutengrund (12) zugewandte Oberfläche (15) des Sperrbolzens (11) in der verriegelten Stellung des Sperrbolzens (11) formschlüssig an dem Nutengrund (12) der nutenförmigen Ausnehmungen (9) des Sperrkranzes (8) anliegt.

4. Vorrichtung nach einem der Ansprüche 1 bis 3, **dadurch gekennzeichnet, daß** der Sperrbolzen (11) schwenkbar an einem nicht höhenverstellbaren Teil der Lenkung oder am Fahrzeugrahmen anordbar ist.

5. Vorrichtung nach einem der Ansprüche 1 bis 4, **dadurch gekennzeichnet, daß** die Oberflächen (19) der zwischen den nutenförmigen Ausnehmungen (9) befmdlichen Stege (10) ebenfalls auf einer gemeinsamen Kugeloberfläche liegen, die parallel zu der Kugelfläche angeordnet ist, auf welcher die den nutenförmigen Ausnehmungen (9) zugeordneten Nutengründe (12) liegen, so daß die Seitenwände (17) der nutenförmigen Ausnehmungen (9) eine im wesentlichen konstante Breite (18) aufweisen.
